Europäisches Patentamt

European Patent Office

Office européen des brevets

Publication number: **0 292 081**
**A1**

# EUROPEAN PATENT APPLICATION

Application number: 88201039.0

Date of filing: 20.05.88

Int. Cl.⁴: **B23H 9/00 , B23H 1/06**

Priority: 21.05.87 NL 8701218

Date of publication of application:
**23.11.88 Bulletin 88/47**

Designated Contracting States:
**AT BE CH DE ES FR GB GR IT LI LU NL SE**

Applicant: **KUIKEN N.V.**
**Randweg 31**
**NL-8304 AS Emmeloord(NL)**

Inventor: **Kuiken, Hendrik**
**Minister Lelysingel 1**
**NL-8302 BR Emmeloord(NL)**

Representative: **Baarslag, Aldert D. et al**
**Nederlandsch Octrooibureau Johan de**
**Wittlaan 15 P.O. Box 29720**
**NL-2502 LS Den Haag(NL)**

## Phase-spark-erosion device.

A device for the manufacture at reasonable speed, cost and high precision of gearwheel toothing by unrolling spark erosion, in which a spark-resistant material, like a tungsten/copper compound is used for the spark-elektrode-teeth. Preferably only part of such spark-tooth is employed as electrode, in the form of a reproducible and replaceable spark-strip at the tooth-tip, which is fitted to a carrying tooth-root made of conventional material, the latter not taking part in the spark-erosion process. To produce correct tooth-flanks with such spark-strip. in addition to the unrolling control, a phase-correction control is introduced, which is a function of the penetration depth of the strip into the blank, resulting in flanks constituted by the envelope of a number of cycloid sections, said envelope forming f.i. a correct involute tooth-flank. Other tooth-shape corrections can as well be introduced as superposition to the phase-correction. Mechanical, electronic and mixed spark-electrode- and control-devices are discussed.

fig-2

## Phase-spark-erosion device.

The invention relates to a device for the unrolling-spark-erosion of gear wheels, in which a "spark wheel" which acts as electrode wheel (spark electrode) and is provided with a number of" spark teeth" is (essentially) unrolled over the surface of the workpiece which is to be provided with teeth and acts as the other electrode and in which the spark teeth on the pitch circle of the spark electrode assume the correct position and are located at mutual circumferential distances equal to one or more full pitch distances and have a width at least equal to the tooth width of the toothing to be manufactured in the workpiece, in which each spark tooth spark-erodes itself deeper into the workpiece under the control of a feed device and in which the resulting tooth formation produced takes place uniformly over the full tooth width,
- comprising a spark generator, a frame having a linear feed device for the control of the electrode relative to the workpiece as a function of the set spark power in relation to the instantaneously occurring spark power, a carrier for the workpiece which is movable relative to the frame, a container which surrounds at least the spark-erosion region and is filled with an insulating liquid, and insulating means between the electrode(s) and the workpiece including the respective carriers thereof,
- the workpiece being fastened via the carrier to the feed device and located coaxially with the direction of the feed movement, such that the workpiece carries out exclusively the penetration feed of the spark-erosion machining as a function of the set spark power, the spark electrode being firmly fixed to an shaft which is rotatably mounted without play on a turn-table which in turn is rotatably mounted without play, coaxially with the feed movement, relative to and by the frame but is fixed in the direction of the feed movement and is provided with means for rotary drive, at least one circumferential toothed control bush (curved rack) having a pitch circle located in a plane perpendicular to the rotation centre line of the turntable being fixed, concentrically with the centre line of the workpiece and with the coaxial direction of the feed to the frame, a follower gear wheel engaging without play in this control bush which follower wheel is firmly fixed to the shaft which carries the spark electrode and serves as drive wheel for that shaft and in which the transmission ratio between the control bush and the follower wheel is the same as that between the spark electrode and the toothing to be manufactured in the workpiece.

A device of the type described is known from European Patent Application 82201239.9. Although the crown wheels to be manufactured with the device are very diagrammatically represented in a number of figures in this patent application and the invention also relates to certain features of the crown wheel teeth, in this connection reference is also already made at this stage to European Patent Application 862021300 which relates to a crown wheel transmission.

Using the device described in the introduction it proved to be possible to manufacture very accurate crown wheels having a high load-bearing capacity. However, the device is also associated with a number of drawbacks which need to be overcome is possible.

Crown wheels which do not have to satisfy stringent requirements in respect of smooth and, above all, low-noise running, in spite of possibly high loading and reasonably long service life, may be manufactured, for example, by forging or rolling or (micro)-casting. These therefore fall outside the scope of the invention. At most, master moulds or models which may be used fall with in the scope of the invention. In particular, the invention relates to high-quality crown wheels which have a high load-bearing capacity and a low-noise running and can be manufactured on a moderate scale. Under consideration here are, inter alia, hardened materials for at least the bearing faces of the crown wheel toothing having a surface quality which is comparable to that which can usually be obtained by grinding. Grinding or a corresponding operation cannot be carried out in practice, in particular in the case of crown wheel toothings in which the teeth on the inner radius of the crown wheel toothing remain fixed to the parent material. Unrolling spark-erosion remains of interest for all these cases.

A considerable drawback of the known device is that the spark electrode wheel is made of copper. On the one hand, it is particularly difficult to manufacture accurate gear wheels of copper because, inter alia, grinding is virtually unusable due to filling of the stone and, on the other hand, as a result of abrasion/erosion due to spark-erosion, the life of a copper electrode wheel is so short that a number of spark wheels is necessary in order to arrive, via a few pre-working steps, at an accurate crown wheel in a final finishing step. In order to keep the life of the copper spark wheel acceptable at all machining can only take place with a low spark power so that the processing time of a crown wheel manufactured in this way is unacceptably long, certainly in the case of series-production. As a guide it may be noted that even pre-machining can take place with a spark power only about 10 % that of the maximum spark power of a known, commercially available spark-erosion machine. Therefore, both the usable spark power and the life of the spark electrode wheel are in need of considerable improvement. It ought to be borne in mind here that, comparable with the risk of hair crack formation in the traditional grinding of teeth as a result of excessive heat development, an unacceptably damaged tooth surface is also obtained in high-power spark-erosion. Therefore, it will only be possible to pre-erode with a high power while the last tens and hundreds of millimetres must be spark-eroded in one or more post-erosion steps with reduced power.

In addition, the device ought to be more universally applicable so that more different crown wheels are spark-erodable in a simple manner for a greater variety of transmission ratios while within certain limits angles deviating from 90° between the axis of the crown wheel transmission and both crossing and intersecting axis ought to be machinable by unrolling spark-erosion.

The object of the invention is then to satisfy a large part of the above-mentioned requirements and to provide a solution.

The device according to the invention and outlined in the introduction is characterized in that the spark teeth from the spark electrode are at least partially manufactured from and/or lined with a spark-resistant material such as tungsten/copper compound. Such a material, in particular a tungsten/copper compound, has an approximately thousand-fold machining capacity as compared to the earlier used copper. If the low spark power hitherto used is increased to the approximately tenfold full spark power of the device, the life is prolonged approximately hundred-fold and this is therefore so significant that series-production with, in addition, reasonable machining times become possible. Such a compound can be sintered, hard-soldered or even flame-sprayed. However, the particularly high costs of such a compound are a great drawback. Consequently, according to the invention only the spark teeth, and not the entire spark electrode wheel, are at least partially manufactured of this material. Even less material is required when the spark teeth are only lined therewith

According to a further preferred embodiment of the invention, only a small number, for example 1, 2, 3, 4 or 5 and more of the nominal number of teeth of the spark electrode wheel are present and executed as effective spark teeth, these being distributed uniformly over the circumference of the pitch circle and the nominal number of teeth being a multiple of whole numbers of the number of spark teeth. By appropriate choice of the number of effective spark teeth on the spark electrode wheel relative to the number of teeth to be spark-eroded in the work-piece, each tooth can nevertheless be spark-eroded within several turn-around cycles. The device is controlled such that, during running through its complete engagement path, each spark tooth is slowly unrolled in the known manner over the workpiece and thereby spark-erodes itself deeper into the workpiece. The unrolling movement is then continued mathematically perfectly and greatly accelerated until the following spark tooth is at its engagement and at the same time spark path. The accelerated unrolling movement without spark-erosion lasts only seconds compared with the unrolling time during sparking. The resultant time loss is virtually negligible and the gain consists in the relatively inextensive and simple spark electrode having only a small number of relatively expensive spark teeth.

In spite of the highly increased service life of the spark material used this nevertheless also exhibits wear, so that it may be advantageous to reduce the quality of spark-resistant material per spark tooth even further.

According to a further preferred embodiment the invention is characterized in that only part of each spark tooth of the spark electrode is manufactured from the spark-resistant material in the region of the tooth tip over the entire tooth width ("spark strip") and that the remaining part ("tooth root") is manufactured from known material (such as copper or optionally copper-plated steel), the tooth root being retracted within the the oretical spatial tooth profile so that it does not participate in the spark discharge, and that there are means for phase correction which are adapted so as to ensure that, during the penetration feed when spark-eroding the spark strip into the workpiece correct involute tooth profiles can nevertheless be machined as envelope for a large number of successive phase-corrected cycloid path sections.

The spark strip described can of course be manufactured easily and accurately and has only a small volume and therefore requires a smaller quantity of the expensive spark-resistant material. However, the known unrolling spark-erosion would in this manner only cause a wedge-shaped groove in the workpiece with straight side edges which are the envelope for a large number or successive cycloid path sections. Only at the very bottom of the groove would this correspond to the desired shape of the tooth cavity to be spark-eroded in the workpiece. (In the description of the figures, which follows, this will be explained in detail with reference to attached drawings). Therefore a correction is necessary which, according to the invention, consists in that the spark strip leads in phase for one side and lags for the other side as a function of the penetration feed during spark-erosion. As a result a correct involute is nevertheless obtained which forms an envelope for the large number of successive cycloid path sections (again see description of the figures).

Due to the application of the spark strip the spark electrode is in turn greatly simplified. On the other hand, means for phase correction are necessary but these may be relatively simple mechanically provided they are accurate. After all, the forces which occur during spark-erosion are very small and virtually negligible in comparison with the forces which occur in the traditional gear wheel fabrication method in which milling and/or cutting takes place. The entire spark-erosion machine and the equipment used of course should be stable, free of play and accurate, but there are never any large machining forces.

According to a preferred embodiment, the means for phase correction consist of an accurate, play-free angle-adjustment device arranged in the connection between the follower wheel toothings and the spark teeth, such as a worm wheel/worm transmission with stepping motor and of a pre-programmed control device, such as a processor, which controls the angle adjustment device (stepping motor) during the entire spark operation such that the pre-programmed phase lead and phase lag of the spark strip relative to the follower wheel is obtained as a function of the spark-erosion depth (the feed).

In view of the fact that in the majority of cases a toothing is spark-eroded in the workpiece which should interact, for example in a crown wheel transmission, with a standard cylindrical involute gear wheel, the spark-eroded toothing at each radius in the workpiece is formed by a mathematically exact rack curved to form a circle. The pressure angle which decreases with decreasing radius of the workpiece and which increases with increasing radius do not have to be taken into account because these are produced automatically as a result of the unrolling operation. Only the known and simple mathematical formula of a rack tooth with the chosen pressure angle forms part of the above-mentioned pre-programming of the processor.

As already pointed out earlier, the pre-programming can be such that, in a simple manner, the spark operation takes place at full power until the desired tooth shape is reached with an allowance of a few tenths of millimetres to approximately 1 mm, depending on various variables, such as the material used, the chosen module and the like. In the subsequent unrolling cycles with increasing penetration feed the post-erosion machining is carried out in one or more steps with continuously decreasing spark power until the perfect tooth shape is achieved.

It will be clear that a tooth face is thus produced which is still an envelope of a multitude of successive cycloid path sections. By considerably limiting the feed per cycle during the last machining stage and at the same time shortening the cycle time a virtually smooth face surface can be obtained. In the description of the figures, which follows, another method of control will also be described, with reference to attached drawings, for obtaining a surface which is as smooth as possible. If extremely high requirements are set, the last microns from the envelope for the successive cycloids can possibly be spark-eroded with the aid of complete spark teeth. It is also possible to achieve the desired object by transiently allowing the ultimate gear wheel transmission to run in. In any case, a certain roughness of the surface is often advantageous as regards retention of lubricating oil.

In view of the fact that a phase-correction device is already necessary for machining with the aid of a spark strip at the position of the tooth tip, this can at the same time be used for introducing a pre-programmed tooth correction and/or to compensate for the wear of the spark strip via the phase correction by using means for measuring the shape of the spark-eroded tooth which emit signals which are fed into the control device pre-programmed with the desired profile shape data, as a result of which wear of the spark strip which is effective at each instant is compensated for.

When using spark strips an alternative phase correction is also possible according to the invention for the case in which the transmission ratio is 1:1 and the module is equal, which is characterized in that the phase-correction means are formed by each tooth of the follower gear wheel which runs on the control race, being provided with a geometrically identical tooth profile corresponding to that of the spark teeth, provided with a spark strip, of the spark electrode, and by means, such as a friction clutch, which can exert optionally a torque on the shaft in each of the two directions of rotation during standstill and rotation of the shaft, so that the teeth tips of the follower gear wheel completely follow the two profiles of the control bush teeth, all this in particular for post-erosion in order to achieve a high tooth accuracy.

According to this solution, the follower gear wheel follows the control bush not with the normal tooth faces but with a tooth profile which is geometrically identical with the spark strip, so that this different follower gear wheel virtually always runs with high "tooth play" in the toothing of the control bush. Comparable to the earlier mentioned phase lead and phase lag correction, this tooth play is cancelled by means of the said friction clutch as a result of the fact that each face of the tooth of the control bush is individually sensed and post-eroded in the workpiece. This is likewise an unrolling machining operation which is suitable in particular for post-erosion because the machining speed is low. However. the above-discussed spark strips are also advantageously used here.

According to a further preferred embodiment, the above-mentioned spark tooth or spark strip is manufactured, for example, by pressing and sintering of a mixture of tungsten and copper particles and thus forms a loose replacement part which can be mounted by, for example, clamping or hard-soldering on the carrying tooth root of the spark electrode. It will be clear that in case of a accurately manufactured, sintered spark strip and a clamping construction, which is, for example, dovetail-shaped, the spark strips can be fitted sufficiently accurately and in a reproducible manner, on the spark electrode, without subsequent machining being necessary. A special adjusting tool may be used for this purpose. This may also be useful in the case of hard-soldering. For the highest requirements in respect of accuracy it will be necessary for the spark electrode with the attached spark strips to be subjected to a brief subsequent machining operation. This can conveniently take place on the known processing machines for cylindrical gear wheels.

In the spark strip, the narrow side edges spark-erode the successive cycloid path sections, the envelope of which forms the tooth face in the workpiece. In order to retain the required accuracy as long as possible these side edges must therefore be involved as little as possible in the spark erosion operation. For this purpose, according to a further characterizing feature of the invention, the effective spark part of the spark strip has a cross section with a width equal to the tooth cavity to be sparked but -in the mounted situation - with a central part which is radially extended outwards and, as a "wear body", carries out the greatest part of the spark-erosion work and at the same time produces the non-critical tooth cavity bottom in the workpiece. This can be improved still further when the spark strip - viewed in the mounted spark position - has a war body having a cross-section increasingly extended outwards in the tooth width direction corresponding to an increasing radial diameter of the workpiece area to be machined. As a result, by far the largest part of the spark-erosion work takes place with the non-critical wear body at the outside of the spark strip mounted in the spark electrode. As will be described in detail below with reference to the associated figures it is in this connection worthwhile to spark-erode only with increasing penetration feed, so that the spark-erosion work is carried out with the wear body. The same applies to the accurate post-erosion. In view of the fact that the shape of the tooth cavity bottom is not critical in virtually all the gear wheels and certainly in crown wheels, and moreover remains rounded, the wear body of the spark strip can virtually be completely worn away during successive spark-erosion operations, before the spark strip in question has to be replaced. As is evident from the above, the control of the feed in relation to the phase correction should preferably be carried out such that the side edges of the spark strips participate as little as possible in the spark-erosion.

As will be described in detail in the text below in the description of the figures the lag and lead correction to be applied may take place subsequently in time but may also take place simultaneously by a constructionally different solution, in each case as a function of the spark-erosion penetration (feed).

If, according to the invention, use is made of the expensive spark-resistant material for the spark teeth, it is desirable, as described above, to work with as few effective spark teeth as possible, this number being a fraction of the nominal number of teeth of the spark wheel. Because it is furthermore desired to do with a minimal variety of such spark wheels and nevertheless to be able to spark-erode crown wheels with a large variety of number of teeth - all, of course, within a given module - it is advantageous, according to a preferred embodiment of the invention, that a few control racks with small mutual distance are arranged concentrically next to each other with tooth numbers formed as a product of prime numbers, for example

a. $2.2.2.3.3.5 = 360$
b. $5.7.11 = 385$
c. $2.2.3.5.7 = 420$,

preferably with the same module for each control rack to be able to engage with the same follower gear wheel.

By then having a number of subsequent gear wheels with the same module as the control racks, the required large variety of crown wheels can be spark- eroded with spark wheels which differ little, by suitable combination with one of the control racks. After all, the follower gear wheels are normal, commercially available, cylindrical gear wheels which, despite being highly accurate, are relatively inexpensive and obtainable with any desired number of teeth. It may be mentioned as an example that all the teeth of a crown wheel with 54 teeth can be spark-eroded with a control rack having 360 teeth, a spark wheel having 3 spark teeth and a transmission ratio of 15:54 (3.6) and 100 teeth on the follower wheel.

Because in practice crown wheel transmissions will frequently be used with, for example, axes crossing each other and/or axes intersecting or crossing each other under an angle other than 90° the device according to the invention may be adapted further to make this possible, as will be described in detail in the claims and in the subsequent description of the figures. In this respect the fact that the follower gear wheel runs in a narrow control rack and that therefore the axis of rotation of this follower gear wheel can also lie, without appreciable loss of the control accuracy, outside a plane which is not parallel to the plane through the toothing of the curved control rack is of vital importance. The greater the angular deviation, the smaller will the number of teeth on the follower wheel have to be or the further the follower gear wheel has to engage in the control rack radially outwards relatively to the control rack. The decrease, necessary with increasing angular deviation, in the number of mutually meshing teeth of the follower gear wheel is as a result achieved with the control rack. It will be clear to those skilled in that art that use of spur toothing on the spark wheel gives a spur toothed workpiece which is particularly advantageous in the case of axes in a crown wheel transmission which cross each other.

It is to be noted that all the above is based on a completely mechanical and simple unrolling method. When using the When using the spark strip in place of a complete spark tooth on the spark electrode a phase correction has to be superimposed, however, on the unrolling control. This may be carried out mechanically but preferably with the aid of electronically pre-programmed means.

It will be clear to thoses skilled in the art that the mechanical unrolling control can also be re placed by any other equivalent control, in particular electronic control. This can then be combined with the phase corrections and other corrections to form one programme. This will be explained in detail in the claims and the following description of the figures. The control device or processor then coordinates the three main movements. The unrolling synchronization of the two axes of rotation in which the desired number of teeth is processed, the phase correction and the feed. If the spark electrode is provided with only one single spark tooth (spark strip) any desired tooth number can now be manufactured in the workpiece and thus any desired transmission ratio. Furthermore, it remains possible to work with more than one spark tooth. This, however, forms again a complication if wear correction of the spark tooth is applied because each tooth then has to be measured individually and the associated correction has to be applied when it is the turn of the tooth in question in spark. By the way, for less accuracy, an averaged wear correction may also be used.

It will·be clear to those skilled in the art that, when using single and combined electronic controls as equivalent in respect of mechanical controls, the generally known zero-point or reference systems for rotations and translations, known of (metal) processing machines with numerical control (NC) can be used. Therefore, it is not necessary to explain these in detail.

In the description of the figures which follows, the invention will be illustrated in detail with reference to the drawings, in which

Figure 1 shows diagrammatically a section through the device for the unrolling spark-erosion of gear wheels according to the known state of the art;

Figure 2 shows a preferred embodiment of a tooth of the spark electrode provided with a spark strip in exchangeable design;

Figure 3 diagrammatically shows the type of grooves which are spark-eroded into the workpiece with the spark strip according to Figure 2 when unrolling exclusively takes place in a mathematically perfect way and thus a large amount of material remains. The phase correction added according to the invention makes it possible to spark away this material, as indicated in Figure 3b;

Figure 4 shows details of the spark strip in a preferred embodiment as used for the processing as discussed in relation to Figure 2 and 3;

Figure 5 shows the minimum unrolling angle of the spark tooth, provided with the spark strip, corresponding to the unrolling path on the workpiece, over which the spark process has to take place;

Figure 6 shows some of the possible unrolling methods;

Figure 7 shows, in simplified form, one of the technical possibilities for applying phase correction during the unrolling spark erosion;

Figure 8 shows an alternative embodiment of the spark strip with the associated tooth root according to Figure 2 in which the positive and negative phase corrections can be carried out simultaneously;

Figure 9 shows a preferred embodiment of the entire phase-angle correction device belonging to the divided spark strips according to Figure 8;

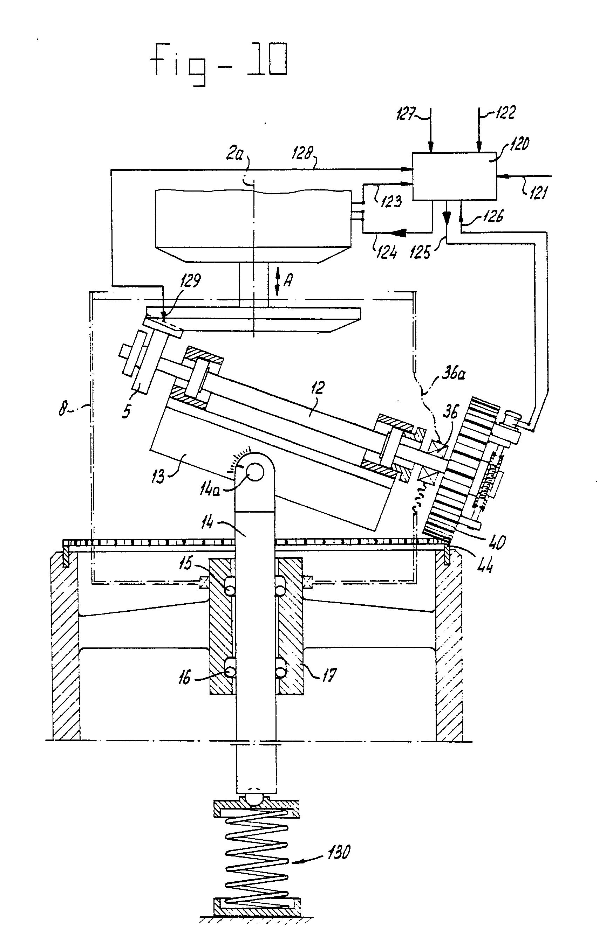

Figure 10 shows, diagrammatically, the control system of the penetration feed associated with the spark erosion, as well as the phase correction when the spark strip is used, extended with possible other correction and control methods, all based on a processor. The figure furthermore shows, diagrammatically, a constructional solution for being able to fabricate differently formed crown wheels with the above-described device for the unrolling spark erosion, in particular for manufacturing crown wheels for crown wheel transmissions, of which the axes intersect or cross each other under an angle deviating from 90°;

Figure 11 shows, in top view and diagrammatically, parts of the device according to the invention adapted for unrolling spark erosion of crown wheels for a transmission with axes crossing each other, optionally under an angle deviating from 90°;

Figures 12 and 12a show, in diagram, the control system of a device according to the invention in which all the controls of the unrolling movement, the transmission ratio, the phase, shape and wear corrections, are electrically controlled via a processor, based as far as necessary on monitoring measurements.

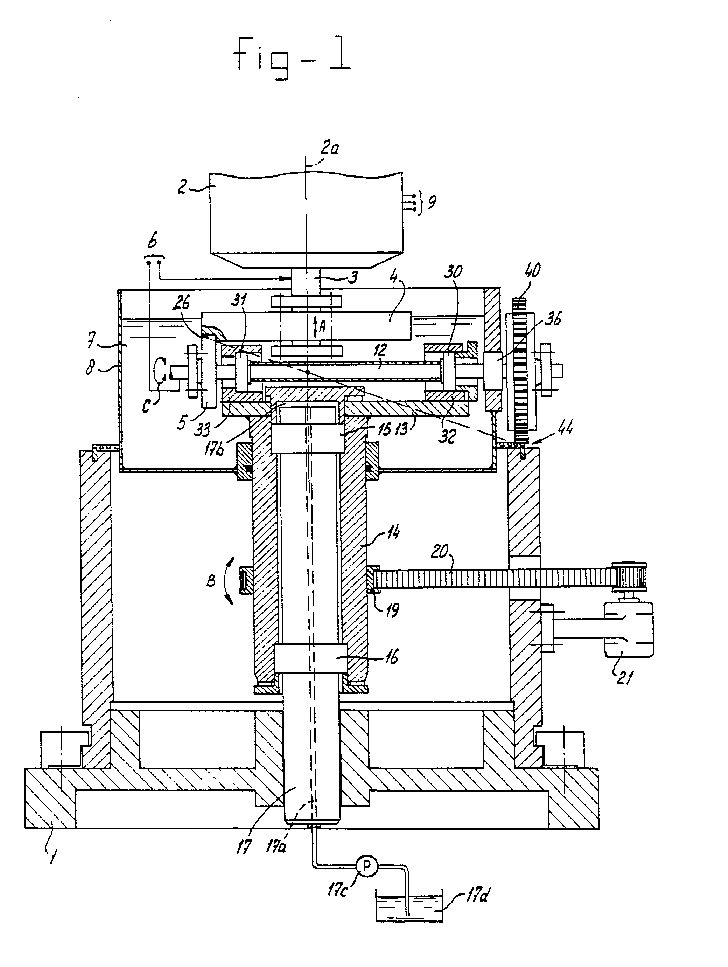

Figure 1 again shows the unrolling spark erosion device as described in European Patent Application 82201239.9, because reference is often be made to this below and, moreover, the present invention is essentially based on improvements and further developments of this device. It will be clear, however, to those skilled in the art that both the essence and many detailed solutions according to the invention can be used with the same effect in other similar devices.

The frame 1 of the device is fixed on the table of a known spark erosion machine (not shown in more detail). The processing head 2 is shown only diagrammatically and is optionally adjustable in height, robust and firmly fixed to the work frame (not shown) of the spark erosion machine. In the direction of the centre line 2a the spindle 3 which can only be moved in and out in the axial direction without play along the centre line 2a projects at the bottom of the processing head 2. The spindle 3 is furthermore locked in a play-free manner against rotation relative to the processing head 2. With the aid of the axial movement of the spindle 3, indicated by arrows A, the advance can be given in order to allow the spark-erosion tool to penetrate the workpiece during the spark-erosion operation thereof. This advance movement A is controlled by the spark erosion machine as a function of the spark power observed relative to the set spark power. This control is diagrammatically represented with the control and measurement connections 9. The workpiece 4 is mounted on the spindle 3 in a detachable and accurately reproducible manner. A toothing 26 is spark-eroded in the workpiece 4 with the spark electrode 5, here represented in the form of a spark electrode toothed wheel. The spark wheel 5 is detachably fixed, without play and in a reproducible manner, on a shaft 12 which carries at its other end a follower gear wheel 40, again without play. The shaft 12 is mounted so as to rotate without play via the bearings 30 and 31 in housings 32 and 33 on a turntable 13. This turntable 13 is solidly fixed on a stable turntable shaft 14 which in this example is of hollow construction and is mounted, so as to be rotatable and axially displaceable, on a shaft 17 with the aid of play-free bearings 15 and 16, which shaft 17 forms a rigid entity with the frame 1. The centre line of the shaft 17 is accurately coaxial and concentric with the centre line 2a of the processing head 2 of the spark-erosion machine. The rotation of the turntable 13 thus also takes place about a centre line which is accurately concentric with the direction of the advance A.

At the upper side of a concentric structure of the frame 1, an accurately concentric groove 42 is provided with a diameter such that this corresponds to the radial distance relative to the rotation centre line 2a on which the follower gear wheel 14 moves during rotation of the turntable 13. A very accurately toothed control bush 44 is fitted, without play but replaceably, in the groove 42, the toothing 41 of which extends very accurately in a plane perpendicular to the centre line 2a. The follower gear wheel 40 has a corresponding toothing and engages without play in the toothing 41 on the control bush 44. During rotation of the turntable 13, driven by the motor 21 via the toothed belt 20 and the toothed belt wheel 19 on the turntable axis 14, the follower gear wheel 14 unrolls over the control bush 44. The shaft 12 is rotatingly driven so that the spark tooth wheel 5 also unrolls over the lower side of the workpiece 4. This rolling movement without play ensures the so-called slip-free unrolling movement of the spark tooth wheel 5 over the workpiece 4, as a result of which during gradual downward movement with increasing vertical feed A during rotation of the turntable 13 the spark tooth wheel 5 gradually spark-erodes the corresponding crown wheel toothing 26 (according to this example) in the workpiece as a perfect unrolling movement. This is diagrammatically indicated in Figure 1 by arrows B and C which respectively indicate the slow rotation of the turntable 13 with accessories and the resulting unrolling rotation C of the shaft 12 and the spark tooth wheel 5. 6 diagrammatically indicates one of the possibilities for supplying the spark current to the workpiece 4 and the spark electrode 5. This type of spark operation takes place in a known manner in an insulating liquid 7 present in a container 8. In the examples shown the container 8 rotates with the turntable 13.

The unrolling spark erosion can be carried out in different ways. The most obvious way is a continuous slow rotation B of the turntable 13, the spark electrode wheel 5 slowly unrolling over the underside of the workpiece 4. During the successive revolutions the feed A will gradually increase, controlled by the desired spark power. It is, however, also conceivable that the unrolling spark erosion takes place in an oscillating manner, the rotation taking place alternatively to the left and to the right over one or a few or several teeth of the spark erosion wheel 5, while the feed A increases gradually. This is diagramatically represented by the arrows B and C being shown in both directions. How ever the processing takes place it always remains an unrolling spark erosion.

Said European Patent Application 82201239.9 reports that the follower gear wheel 40 runs without play on the control bush 44, that is to say with the toothing face on face. In order not to obtain an overloading and consequently excessive wear of the delicate and accurate control bush it is desirable that the total weight of the turntable 13 with accessories, such as the liquid-filled container 8, should not be allowed to rest completely on the toothing 40-44. Part of the weight may be carried by hydraulic means. These are additionally shown in Figure 1 in that a hydraulic medium is carried up via a bore 17a through the shaft 17 to a chamber 17b, which chamber is enclosed all round and in which the bearing 15 can, for example, be provided with sealing rings (not shown). The hydraulic medium is pressurized by a pump 17c and supplied from a container 17d. All this is, of course, represented diagrammatically, pressure regulating means, control means, and so on, not being shown because they are known in many embodiments. By applying a predetermined pressure to the hydraulic medium an upward force will be exerted in the chamber 17b such that some of the weight of the turntable 13 with accessories is carried in a friction less manner, so that the load on the follower gear wheel 40 in the control bush 44 decreases accordingly. In connection with the discussion of Figure 10 below, this diagrammatically represented hydraulic support is also of importance

Particularly accurate and high-quality toothings are to be manufactured and have been manufactured with the device described in Figure 1. A copper electrode gear wheel 5 is used. The great drawback of this is, on the one hand, the great difficulty involved in making very accurate copper electrode wheels and, on the other hand, the fact that wear of the spark electrode wheel 5 during the spark erosion operation is so great that several electrode wheels 5 are necessary for manufacturing one toothing 26 in a workpiece 4 and that moreover the processing takes place so slowly, because only about 10 % of the installed spark-erosion power in the machine can be utilized in view of the wear of the spark electrode wheel 5, that this processing method is economically unacceptable and is in need of improvement.

According to the invention, the use of a copper.tungsten compound for the spark teeth constitutes a great improvement because the service life is improved about thousand-fold or approximately hundred-fold at the full spark power of the spark erosion machine. Because the tungsten/copper compound is, however, particularly expensive the invention proposes to manufacture only the spark teeth of this material, or, preferably to line the teeth therewith and/or to use only a fraction of the nominal of teeth of the spark gear wheel 5 of this material. Although a tungsten/copper compound can be reasonably machined a spark electrode wheel thus equipped with a small number of effective spark teeth will nevertheless be fairly expensive because the teeth must have the exact size and be true to scale, in each case for the post-machining. It may be noted in this connection that the sparking with the full spark power causes damage to the surface of the workpiece comparable to the microcracks during high-power grinding of hard surfaces. The full spark power can therefore only be used, depending, inter alia, on the material of the workpiece used and on the requirements imposed on the toothing, to a spark-erosion tooth depth with an allowance of a few tenths to about 1 mm. This is, of course, also dependent on the module of the toothing to be manufactured. Post-erosion will then be necessary, with gradually decreasing spark power down to and including the last microns with low power, so that the workpiece is finally ocmplete with a good surface quality of the sparked toothing. Accurate non-work spark teeth are of course necessary for this.

Although the above already achieves a great improvement relative to the known state of the art it is desired to eliminate the remaining drawbacks as far as possible.

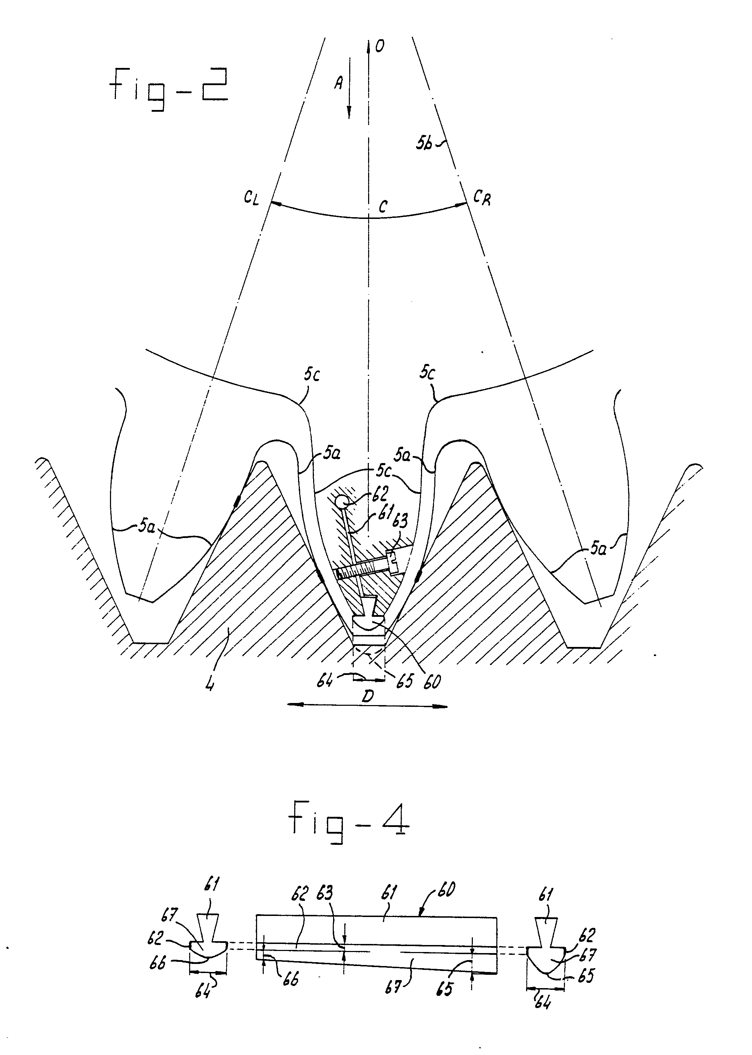

Figure 2 shows a further preferred embodiment of the invention in which only the part of a spark tooth in the region of the tooth tip is made of the spark-resistant material, specifically over the full tooth width, and the remaining part, the tooth root, is made of known and in expensive material. The tooth root is retracted within the theoretical spacial tooth profile so that it never participates in the spark discharge

In order to prevent misunderstandings it may be pointed out that in Figure 1 the downward feed during spark erosion takes place by moving the workpiece 4 in the drawing downwards relative to the spark electrode wheel 5. By contrast, the movements in Figure 2 and in all subsequent figures in which downward feed A occurs, are reversed for the sake of clarity: the spark electrode wheel 5 or the spark teeth approach the workpiece 4 with feed A during a movement vertically downwards in the figures. The reason for this is the fact that the toothing 26 manufactured with the unrolling spark erosion according to the invention is a perfect rack when developed at each arbitrary radius of the workpiece, this generally being shown at the lower side and the interacting toothed wheel (spark wheel) being represented above this. It is already known from the European Patent Application 82201239.9, already mentioned above, that the pressure angle changes for various radii of the workpiece, all this starting from a standard involute toothed cylindrical spark electrode wheel 5.

In Figure 2, 4 indicates the workpiece with the spark-eroded tooth rack at an arbitrary radius from the centre line of the workpiece. 5a indicates the face of which, as is evident in the central tooth cavity, has been fed A to the desired depth. In fact, 5a in Figure 2 indicates the toothing of the involute toothed wheel which is to mesh after the spark erosion operation with the spark-eroded crown wheel toothing in the workpiece 4. In order to spark- erode the tooth base cavity deep enough into the workpiece the actual spark teeth have to have an extended tooth tip, which is not shown. It will be obvious, however, for those skilled in the art that Figure 2 merely shows the essence, and after all the tooth cavity bottom will in practice never be designed with an acute angle, but rounded.

Figure 2 also shows, however, a preferred embodiment of the invention, in particular using an electrode disc 5b, which in the representation only carries one spark tooth the tooth root faces of which are indicated with 5c. A spark strip 60 is attached at the place of the tooth tip. For the purpose of illustration, the spark strip 60 with its tooth root and the electrode disc 5b is shown with the feed A not yet completely carried out to the desired depth. The feed A should be continued further until the lower side of the spark strip 60 has reached the tooth cavity bottom indicated by dotted lines at 65. It will be clear that the tooth root faces 5c will not yet have reached the profiles 5a of the toothed profile 5a of a complete involute tooth. As a result, the spark discharge will never be able to take place at the faces 5c during the spark erosion but exclusively at the place of the spark strip 60. It may furthermore be noted in this connection that a "rolling movement C" over the circumference of the work-piece 4 is repeatedly mentioned, so that this unrolling movement in Figure 2 and in the corresponding figures can be represented as a play-free rotation of the electrode wheel 5 over a peripheral angle C which corresponds to a horizontal displacement (in the figure) of the workpiece 4 over a distance D.

The spark strip has a width which is indicated by 64 and which accurately corresponds to the width of the tooth tip which is replaced by the spark strip 60. The radial position, starting from central point 0, of the maximum width 64 of the spark strip is also the same as in the starting toothed wheel or starting spark wheel. The width 64 of the spark strip remains constant over the width of the toothing to be manufactured, as does that of the tooth tip to be replaced. According to Figure 2, the toothed strip can in an accurately reproducible and simple way be clamped in a dovetail construction at the tooth root of the electrode disc 5b. For this purpose, a slanting slot 61 is chamfeugh-hole 62. At the right hand side of Figure 2, this results in a stable and non-deformable section of the tooth root while the left-hand part is somewhat elastically deformable. As a result, the spark strip can easily be taken into and out of the dovetail-shaped groove and subsequently be firmly tightened with one or more screws 63. It will be clear that replacement of worn tooth strips is easily possible and that they can be remounted accurately on the same place with such a construction. The construction drawn is particularly attractive for somewhat larger modules, such as shown, and will possibly present difficulties in the case of much smaller modules. In that case, the spark strip can be fixed, for example, by means of hardsoldering to the tooth root. This may also be carried out in a highly accurately reproducible manner using a suitable adjustment tool

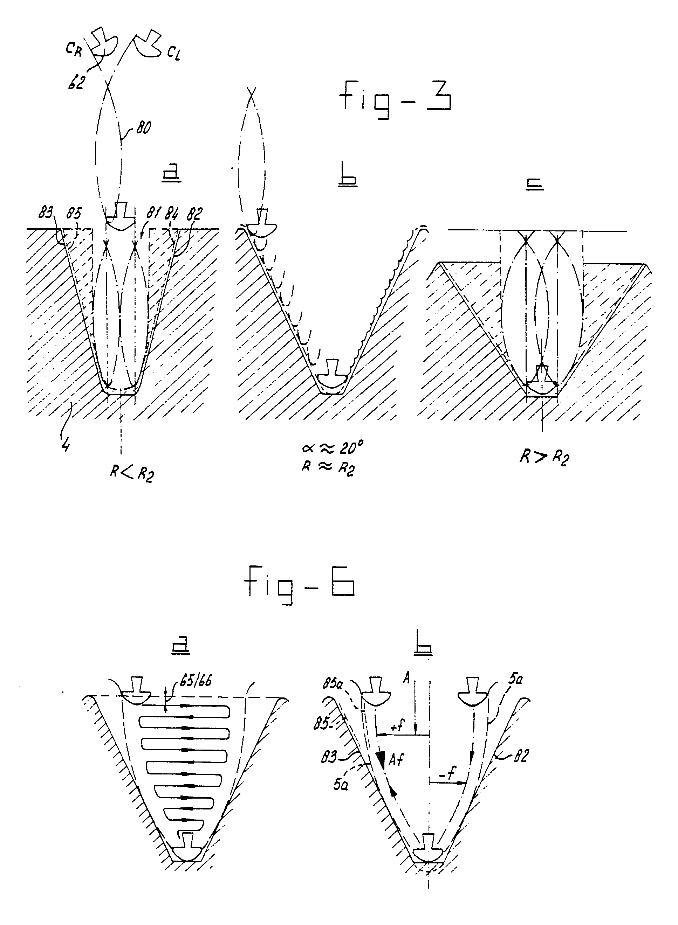

Figure 4 shows a spark strip as an example, such as is used in the embodiment according to Figures 2 and 3. The dovetail-shaped ridge is indicated by 61, and the actual spark strip is fixed underneath it. As already illustrated above, this has a constant width 64 over its entire length, which width 64 corresponds to that of the tooth tip to be replaced. It is the edges 62 of the spark strip which ultimately determine the accuracy of the tooth face to be sparked. This will be explained in detail in the discussion of Figure 3. In order to have the edges 62 carry out as little spark-erosion work as possible and therefore to retain their accuracy as long as possible, the spark strip is provided with a wear body 67 which projects downwards and has to carry out the largest part of the spark work. Any wear thereof has no influence on the accuracy of the manufactured tooth faces and only has an insignificant effect on the depth of the tooth base cavity 65 as represented in Figure 2. Because considerably more material has to be spark-eroded at a larger radius from the centre line of the crown wheel in the machining, chosen as example, of a crown wheel toothing, then at a small radius, the depth of the wear body at one side 65 is larger than at the other side 66. On fitting the spark strip in the tooth root account must therefore be taken of the fact that the wear body 67 is mounted such that the largest depth 65 is located on that part of the spark tooth which has to spark erode the outer side of the crown wheel toothing.

It will be clear that no oomplete rack tooth profiles can be manufactured during the unrolling operation with a spark strip 60 as described in Figures 2 and 4 and arranged at the place of the tooth tip of a spark tooth. This is shown diagrammatically in Figure 3.

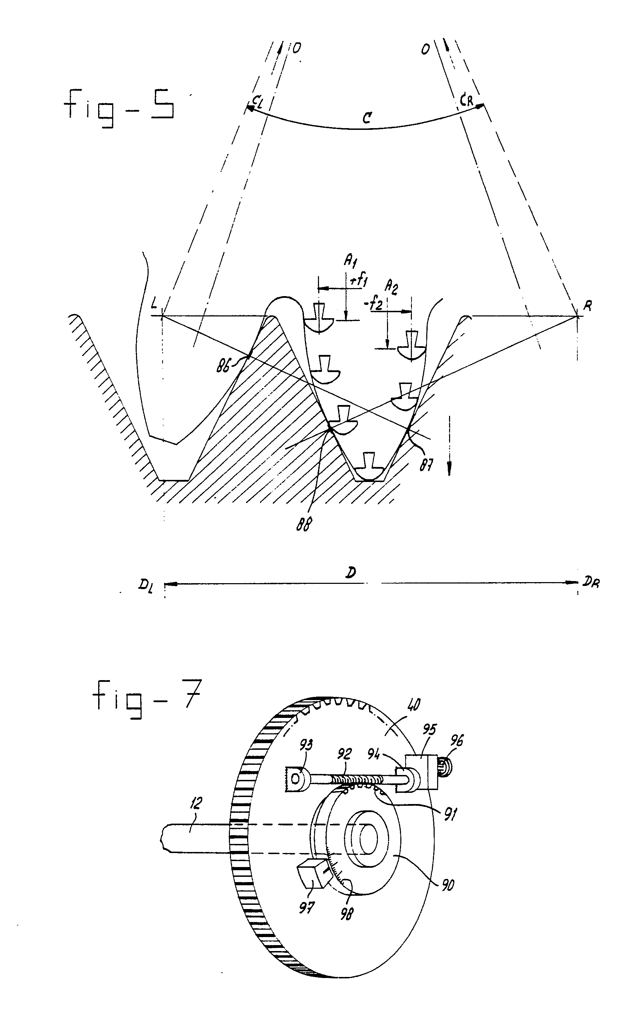

In a perfect unrolling spark erosion-operation in which the spark erosion exclusively takes place with the aid of the above-described spark strip 60 attached at the place of the tooth tip of a conventional spark tooth, it is only possible to spark-erode grooves approximately with parallel side faces in the workpiece as represented in Figures 3a and 3c. During development, each of the side edges 62 of the spark strip describe a cycloid, which is characteristic for the module given, and of the given nominal tooth number of the spark toothed wheel and of the work-piece. In the upper section of Figure 3a the relative movement of the spark strip 60 during the unrolling movement relative to the workpiece 4 is given. For the sake of clarity, the cycloid path which describes the left-hand side edge 62 of the spark strip is given in the position with feed A = 0, that is to say in the situation in which the spark tooth has not yet sufficiently approached the workpiece to start the sparking process. In the lowermost point of the cycloid path 80 the wear body 67 of the spark strip has approached the workpiece so closely that the spark-erosion of the work-piece should be able to start during a subsequent unrolling stroke. Starting from the rotational position CR (Figure 2) in which the spark tooth under consideration actively takes part with its spark strip in spark erosion with the maximum feed depth up to the rotational position CL (Figure 2) the leftmost part of the spark strip runs through the drawn cycloid path 80. The angle of rotation C is of course virtually zero at the beginning at a feed A = 0 and increases to the angle of rotation of CR to CL when reaching the complete penetration feed A-maximum. At the same time, the workpiece 4 is also displaced over the distance D, as discussed in Figure 2. (This is also shown in Figure 5). The relative position of the spark strip during running through the effective unrolling rotation angle relative to the parallel-moving workpiece 4 is shown in Figures 3a and 3c. With increasing penetration feed A the spark body 67, limited by the left-hand side edge 62 and the right-hand side edge 62 of the spark strip, will spark-erode a conical groove having straight side edges in the workpiece, as diagrammatically shown in Figure 3a. This occurs during a perfect unrolling spark-erosion operation with exclusively the tooth tip in the form of the spark strip as the sparking part of the spark electrode. The desired rack tooth faces 82 and 83 are not yet achieved in this manner. Furthermore, as described above, this operation will only be able to take place in the pre-erosion operation with high spark power, to the pre-processing faces 84 and 85 shown by dotted lines. A few tenths of millimetres of material thus remain which should be post-eroded later with a lower spark power. It follows from this that, as shown in Figure 3a, the maximum spark-erosion depth A-maximum must equally not have to be reached during pre-erosion in order not to obtain a material surface with hair cracks and other damage in the bottom of the tooth cavity.

Figure 3c shows the same but on the outer circumference of the workpiece where, in the case of sparking-in a crown wheel toothing, the pressure angle is greater than the standard pressure angle $\alpha$ = 20°, chosen as an example. In Figure 3a, by contrast, the crown wheel toothed shape is shown at the smallest radius, the pressure angle $\alpha$ being considerably smaller than 20°, and this is indicated by $R < R_2$, which means that the radius in the workpiece 4 to which the section shown applies is located at a smaller radius of the crown wheel than the nominal radius R2 for which the pressure angle of for example $\alpha$ = 20° applies, corresponding to the pressure angle of the toothed wheel which should ultimately form the desired transmission with the manufactured crown wheel. Moreover, it follows from the above that at a radius of $R > R_2$ the cycliods described by the various effective spark positions of the spark strip (only those of the two side edges 62 being represented) have a wider shape than those according to Figure 3a, applying for $R > R_2$. It is also true of to Figure 3c that a groove with straight side edges is spark-eroded in and that with high spark power this cannot be continued further than to the faces, with allowances, 84 and 85 shown by dotted lines.

Figure 3b shows the tooth face which applies for a radius R equal to the nominal radius $R_2$ for the chosen pressure angle = 20°. As already illustrated in Figures 3a and 3c the desired tooth profile 82, 83 is not processable with a perfect unrolling movement. However, Figure 3b shows what is ultimately aimed for. This is made possible due to a further characterizing feature of the invention in which a correction is applied to the mathematically perfect unrolling movement, viz. a phase shift depending on the sparking-erosion feed A. This will be illustrated in more detail with references to Figures 5 and 6.

By then providing a positive or negative phase correction f, superimposed on the mathematically perfect unrolling movement, to the spark strip during spark-erosion as a function of the feed depth A, as shown in Figure 6b, it becomes possible accurately to follow the tooth flank profile of the perfect complete tooth flank 5a (Figure 2) with the side edges 62 of the spark strip. This is shown by do clearly shows that the positive and negative phase angle corrections must decrease to zero with increasing feed depth A on reaching the maximum spark-erosion depth. If phase angle correction is used, a tooth flank profile can be spark-eroded such as diagrammatically represented in Figure 3b. This is constructed of a number of successive phase-corrected cycloid path sections so that the involute tooth faces are produced with a multitude of such successive path sections as an envelope for these path sections. In the left-hand tooth face in Figure 3b, the rough pre-processing with high spark power is diagrammatically represented and on the right-hand toothed face the surface achieved by this is shown, and it can be seen from this that the envelope for the multitude of cycloid path sections already approaches the desired straight tooth face of the rack. On continued post-erosion with lower spark power and smaller feed steps it will be possible to obtain a smoother surface.

Figure 6a shows one of the possible ways of controlling the phase correction relative to the increasing feed depth. It may be expressly repeated that this processing, too, such as all the processings according to the invention, is based on and controlled by a perfect unrolling movement. However, according to the invention the above-mentioned phase correction is super-imposed on this. In view of the fact that the side edges 62 of the spark strip erode the definitive tooth faces during post-machining and at the same time must retain their shape and dimensions accurately as long as possible it is desirable to limit the participation of the side edges 62 in the sparking process as much as possible to post-erosion. The specially fitted wear body 67 (Figure 4) should be used for high-power pre-erosion and the associated wear of the spark strip. This is represented in Figure 6a in which a zigzag line indicates a manner of control in which virtually the entire material of the tooth cavity to be spark-eroded is removed by the wear body 67. For this purpose, the initial feed is limited to a depth which corresponds to the smallest "thickness" 66 of the wear body of the spark strip. With such a penetration feed, the wear body 67, during the phase correction from left to right as shown, for example, in Figure 6a, will carry out all the spark-erosion work while the vulnerable side edges 62 of the spark strip do not participate in the spark operation. When the phase correction has been run through from left to right with the first feed, a new step follows in the feed path equal to the previous one so that the following layer is sparked out of the workpiece in the same manner but now with the phase correction running from right to left. This operation is continued with increasing feed and simultaneously decreasing phase correction until the maximum feed depth is reached and the phase correction has at the same time decreased to zero. The connection between the required phase correction as a function of the feed depth is obtained according to the invention with means, to be discussed in detail, for carrying out this phase correction.

Figure 6b shows the post-machining in which the allowance on the tooth face 83 given by dotted line 85, should be spark-eroded. A possible control during this post-erosion operation consists in the control no longer taking place in zigzag shape as in the case of the pre-machining according to Figure 6a, but continuously, a continuously decreasing phase angle correction being associated with continuously increasing feed depth A. At the same time, the spark strip describes the path shown, specifically in the direction of the large arrow Af, which indicates that the phase angle is continuously corrected with increasing feed depth. During this post-sparking operation, the largest part of the material to be machined should again be sparked off by the underside of the spark strip, thus by the wear body 67. Only the final tooth face 83 will be sparked off by the side edge 62, but, given the low spark power used, this constitutes only a minimum wear of the side edges 62. Thus, the accuracy of the side edges 62 is retained for a long time. The same applies, of course, to the right-hand side edge, negative correction being applied. For the sake of clarity, the dotted line 85a shows the material which is spark-eroded between the overmeasure 85 and the tooth face 83 during post-machining. The retraction of the spark strip after running through the complete spark-erosion stroke can take place vertically upwards, spark-discharge no longer occurring, but can also take place following the same path, as is shown by the small upward arrow. This movement has the advantage that small flaws on the tooth flank surface 83 where present, can still be spark-eroded but it has the disadvantage that this takes place exclusively with the sensitive side edges 62 of the spark strip. The choice will be determined, inter alia, by the accuracy and smoothness required of the tooth face surface. It will be clear that the tooth faces 83 and 82 according to Figure 6a and 6b cannot be spark-eroded with exclusively an increasing penetration feed A combined with the positive or negative phase correction F with which the spark tooth profile 5a is accurately run through. The above control is thus only described to aid understanding but this will have to be combined at all times, of course, with the simultaneous unrolling movement C, D, as shown in Figures 2, 5 and 8.

Figure 5 is intended to summarize the above once again for the sake of clarity. It follows from Figure 5 that one tooth remains in contact by its two faces, without play, with the rack in the workpiece only over the angle of rotation C. The rack is thereby displaced over a circumferential length D. The points of contact between the tooth faces 86 and 87 move on continued unrolling to point L where the theoretical contact between the tooth face ends between the right-hand tooth face of the wheel and the left-hand tooth face of the rack. The same applies to the right-hand side at the point R. It follows from this, that the unrolling movement and thus the sparking operation is effective with one spark tooth or spark strip over the development angle C between CR and CL, corresponding to a circumferential length D of DR to DL over the rack when developed.

In view of the fact that the invention proposes to provide the spark electrode wheel 5 with only a small number of spark teeth, the unrolling movement during the sparking operation, can again take place in at least two different ways. For the processing as described in Figure 6a, a repeated oscillating development movement, rotating in each case left-right-left is necessary at least over the angle of rotation C and path D. If, by contrast, a continuous unrolling movement C, D is chosen, in which the turntable 13 turns round successively many times and meanwhile the feed A increases and the phase correction F is carried out, the rotation of the turntable 13 can be controlled via the motor 21 if only a small number of effective spark teeth or spark strips are used, in a manner such that the rotation of the turntable 13 takes place very slowly while passing through the angle of rotation C and while the associated sparking occurs, whereas the speed of rotation of the motor 21 can be greatly increased during the continued rotation of the turntable until the subsequent spark tooth can become effective, in order to prevent time loss

For the sake of clarity, Figure 5 again shows that with each feed depth, for example A1 a predetermined positive correction F1 and minus correction F1 is associated. The same applies, of course, to a deeper feed A2 with an associated phase correction, positive and negative F2.

Figure 7 shows a simple phase correction device as an example. This is fitted between the follower gear wheel 40 and the connecting shaft 12 to the spark electrodes. The follower gear wheel 40 is mounted so as to be rotatable without play on the shaft 12. A worm wheel 90 with worm toothing 91 is mounted fixed against rotation on the shaft 12. The toothing 91 needs to be fitted only over a short section of the circumference of the worm wheel 90, because the positive and negative phase angle correction F remains restricted to a few circumferential degrees. This worm wheel 90 is situated right next to the follower gear wheel 40 on the shaft 12.

A worm 92 which is mounted so as to be rotatable without play in bearing housings 93 and 94 is fitted in play-free mesh with the worm wheel toothing 91. These bearing housings 92 and 94 are firmly fixed on the side edge of the follower gear wheel 40. The worm can be driven so as rotate to the left and to the right by a motor 96 via a reduction transmission 95. The two are likewise fixed on the follower gear wheel 40. The motor 96 can be designed as a stepping motor and can in any case be controlled, including the reduction transmission 95 such, that a very accurate angle adjustment of the worm wheel 91 and thus of the shaft 12 relative to the follower gear wheel 40 is possible via rotation of the worm 92. It is self-evident that the (stepping) motor 96 is incorporated in a known feedback circuit (not shown) in order to maintain the zero point as reference. For the purpose of visual inspection of the adjusted positive or negative phase correction, a marker 97 may be provided on the follower gear wheel 40 which interacts with a graduated scale 98 on the worm wheel 90.

In the text above and below, mention is several times made of play-free rotating bearing or axial locking and the like. The various types of high-quality, play-free, axial or rotating bearings are known from machine tool engineering and the like. Therefore these do not have to be specified in detail. It may only be remarked that, in contrast to many other machine tools used for chip-forming machining techniques, the machining forces exerted on the entire device during the spark erosion are very low so that this merely simplifies the use of play-free structures.

Fitting the device, described in Figure 7, for phase angle adjustment on the follower gear wheel 40 has the additional advantage that the entire structure is located outside the container 8 with liquid 7.

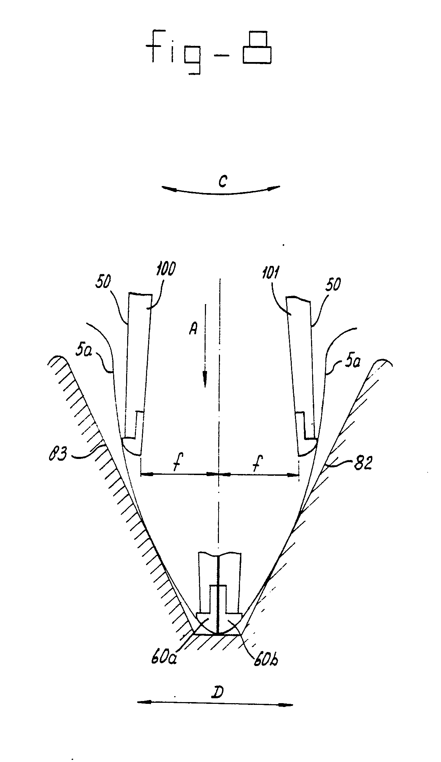

Figure 8 shows an alternative embodiment of the phase correction facility using a spark strip. For this purpose, the spark strip 60 already mentioned is divided over its entire length (the width of the tooth) into two mirror-image parts 60a and 60b which, resting against each other, accurately have the outer shape of the spark strip as shown in Figure 4. Because the tooth root is also divided into two parts 100 and 101, the dovetail fixing according to Figure 2 is practically no longer possible. For this purpose, each spark strip half in the example of Figure 8 is fixed by hardsoldering to the associated tooth root 100, 101. The outer sides of the two tooth roots each have a profile 5c corresponding to that described in Figure 2, so that this profile 5c falls under all circumstances within the nominal tooth profile 5a of a complete spark tooth. What has been described earlier with reference to Figure 2, is against achieved, specifically that the tooth roots 100 and 101 never take part in the spark operation and that this takes place exclusively with the spark strip halves. It is intended with the construction shown in Figure 8 to carry out the positive and negative phase correction simultaneously by spreading and closing the spark strip halves and their tooth roots. This is diagrammatically shown in Figure 8 by f without sign. During the unrolling spark-erosion or the oscillating unrolling the two spark strip halves experience a greater or lesser spreading f as a function of the spark-erosion depth or feed A.

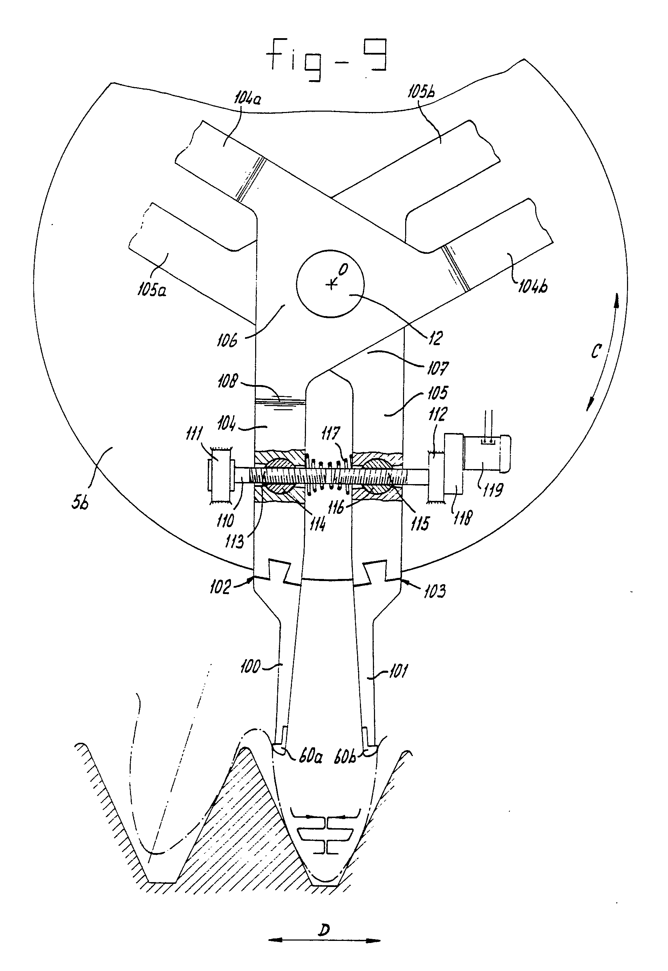

Figure 9 shows a spark electrode having three effective spark teeth, while the spark wheel is dimensioned for 21 nominal spark teeth with the same module and radius. Only one spark tooth in the embodiment according to Figure 8 is elaborated in further detail in Figure 9. The two tooth roots 100 and 101 are diagrammatically fastened with dovetailed-shape constructions at 102 and 103, respectively, to the associated legs 104 and 105, respectively. The dovetail-shaped joints 102, 103 can be designed in a comparable manner to those shown in Figure 2. The intention of this is that each tooth root 100, 101 with associated half spark strips 60a, 60b is easily removable as a unit in a reproducible manner, so that approximately the same is achieved as with the removable spark strips 60 according to Figure 2. Other constructions are of course also possible for this, as known, for example, for cutting tool holders for blanking dies of hard metal, which can easily be prepared with dimensional accuracy in special adjusting tools and are removable and/or replaceable within a short time. In tightened state, the joints 102 and 103 are, of course, completely free of play and reproducible in respect of dimensions, angle, and so on.

The leg 104 is fixed to a carrier 106 to which the other corresponding legs 104a and 104b are also fixed at the correct angle. The leg carrier 106 is mounted around the shaft 12 so as to be rotatable but free of play. The leg 105 is fixed in the same manner at the leg carrier 107 which in turn carries the corresponding other legs 105a and 105b, the leg carrier 107 also being mounted on the shaft 12 so as to be rotatable but free of play. The leg carriers 106 and 107 are located one behind the other on shaft 12, so that a bend has to be introduced in one of the two, specifically, in the example, in legs 104, 104a and 104b at 108, so that the legs 104 and 105 and the tooth roots 100 and 101 and the half spark strips 60a and 60b are all located in one and the same plane perpendicular to the shaft 12, and are rotatable and spreadable, respectively

The mutual angular position of the two legs 104 and 105 relative to each other and relative to the shaft 12 is controlled by the screw spindle 110 which (in the Figure) has a right-hand screw thread 113 on the left and a left-hand screw thread 115 on the right. These run in cylindrical pins 114 and 116, respectively, which are fitted, without play but rotatable, in the legs 104 and 105. On rotation in one direction of the screw spindle the legs will spread, specifically to the same degree to the left and to the right and on rotation in the other direction they will close to the same extent. The screw spindle is mounted by both ends without play but rotatable in bearing housings 111 and 112, respectively. which are firmly fixed to the electrode disc 5b which is mounted, fixed against rotation, on the shaft 12. In this construction the electrode disc 5b therefore follows each unrolling rotation of the follower gear wheel 40 via the shaft 12. Both spark strip halves 60a and 60b are therefore driven, without play, by the double-threaded screw spindle 110 and are controlled by any rotation of the follower gear wheel 40. Furthermore, by rotation of the screw spindle in one or other direction. the desired phase angle correction f can be carried out as a function of the feed depth A, the positive and negative correction taking place simultaneously. A spring 117 pretensioned between the legs 104 and 105 forces any play in one and the same direction so that spreading and closing of the legs and the tooth roots with their spark strip halves takes place completely reproducibly and without play. The drive of the screw spindle takes place in the same manner as described for Figure 7, via a gear wheel reduction 18 and a (stepping) motor 119. Both are fixed on the electrode disc 5b.

It may be noted here that the motor 119 and the further drive are located in the liquid 7. If this is troublesome the shaft 12 (Figure 1) can be extended to the left in a simple manner and passed to the outside through the wall of the container 8 via a corresponding sealing ring 36 on the left-hand side. The mechanism described for Figure 9 can be placed there, two play-free bushes rotatable concentrically about the shaft 12 feeding back the phase angle adjustment to the two leg carriers 106 and 107.

It will be clear that spark electrodes with a different limited number of spark teeth can be constructed in the same manner as in the example according to Figure 9. One of the useable machining cycles is diagrammatically represented in Figure 9 and comparable to that of Figure 6a. The zigzag phase correction in this case takes place by alternately spreading and closing the spark strip half. Post-erosion according to Figure 6b can, of course, take place simultaneously with the left-hand and right-hand spark strip half.

Figure 10 shows two different preferred embodiments. The control of the phase correction and of any further corrections is shown diagrammatically in the top part. For this purpose, a processor 120 which, as shown diagrammatically, is powered via 121, is arranged. 122 indicates the pre-programming of the processor, specifically with data as to the shape of the tooth to be sparked. This can relatively simply be given in formula form as a function of the feed depth A. The processor is fed via 123 with data as to the prevailing feed depth A. On the basis of the input data, the processor emits command signals 125 to the adjustment motor for adjusting the phase angle f. The feedback of the phase angle, inter alia for maintaining the zero point, is diagrammatically shown by 126 as input feedback to the processor 120. Commands for changing the feed depth are given via 124 and are coupled to the measured spark power of the machine as compared to the desired set spark power.

In addition, it is possible to feed the processor with a pre-programmed shape correction of the tooth face shape, such as, for example, roundings of the tooth tips and the like, which is diagrammatically shown by the input 127. In the case of gear wheels bearing high loads corrections in connection with the elastic bending of the teeth can also be taken into account.

In addition, it is possible to measure the occurring wear of the side edges 62 of the spark strips, which is indicated by 129 and can be fed into the processor as correction signal 128. Reading of the wear 129 can take place, for example, optically, acoustically or capacitively or inductively. This may be a direct measurement of the side edges 62 of the spark strip, but may also be a measurement of the actually spark-eroded shape of the tooth face which is then compared in the processor 120 with the desired shape.

Secondly, Figure 10 shows an embodiment of the unrolling spark erosion machine which is especially intended for enabling a toothing to be sparked in a work piece under an angle deviating from 90° relative to the axis of rotation 2a. For this purpose, the turntable 13 is adjustably linked, via a hinge 14a, to the turntable shaft 14, which in the example according to Figure 10 is mounted within the rigid guide 17 so as to be rotatable without play and axially displaceable in diagrammatically shown bearings 15 and 16. After adjusting the turntable 13 to the correct angular position relative to the centre line 2a the hinge 14a can be fixed without play in a known manner (not shown) before starting with the operation. Because the follower gear wheel 40 must remain in play-free mesh in the control toothed rack 44 during the angle adjustment of the turntable 13, the turntable shaft 14 will have to be adjustable in height which is diagrammatically represented with bearings 15 and 16, for which purpose, for example, ball circulating screw races with adjustable play can be used. The weight compensation of the turntable 13 with accessories will also have to be adjustable in height, and for this purpose, on the one hand, the hydraulic system 17a to d incl. according to Figure 1 can be used or a simpler compensation system with spring such as diagrammatically represented by 130 in Figure 10. The lead-through of the shaft 12 through the wall of the container 8 via the shaft seal 36 will also have to be adjustable. This is diagrammatically represented by the seal 36 being received in an elastic and deformable diaphragm 36a. Other known constructions are, of course, also usable for this purpose.

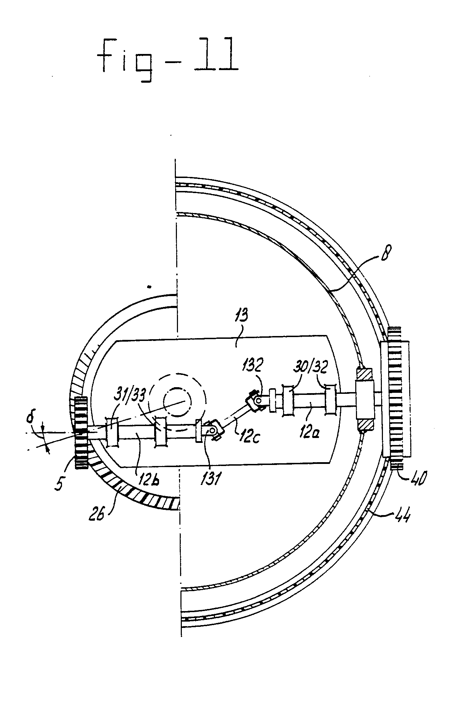

Figure 11 shows a diagrammatic partial top view of the turntable 13 with accessories and of the toothed control bush 44 and the follower gear wheel 40. Attention is focused on the fact that for the sake of clarity the toothing in the workpiece is shown visible from above but that in reality this should be rotated through 180° to become invisible. At the same time, the shaft 12 is subdivided into two shaft sections 12a and 12b which are each separately mounted on the turntable 13 so as to be rotatable but without play with the bearings 30/32 and 31/33. The shaft sections 12a and 12d are coupled to each other via a linking shaft 12c and two homokinetic cardan couplings 131, 132, for completely isochronous rotation. Other positions of the shaft section 12b relative to 12a are also possible as long as the spark electrode 5 rotates isochronously along with the follower wheel 40 during the unrolling movement. The straight toothing of the spark electrode 5 shown, results in slanting teeth 26 in the embodiment shown on the crown wheel 4. Such a toothing is desired in many cases when the axis of the gear wheel and of the crown wheel in a crown wheel transmission cross each other, optionally at an angle of 90°. According to the diagram, the crown wheel toothing receives a toothing with a slant under an angle of δ. The bearings 30/32 may essentially be firmly mounted on the turntable 13, so that the follower gear wheel 40 always meshes optimally in the control bush 44 and that this source can therefore not introduce any deviations in the toothing to be manufactured. By contrast, the bearings 31/33 may be made adjustable for the manufacture of crown wheel transmissions within a wide range, with axis crossing or intersecting each other at an arbitrary angle deviating by approximately plus and minus 45° from 90°.

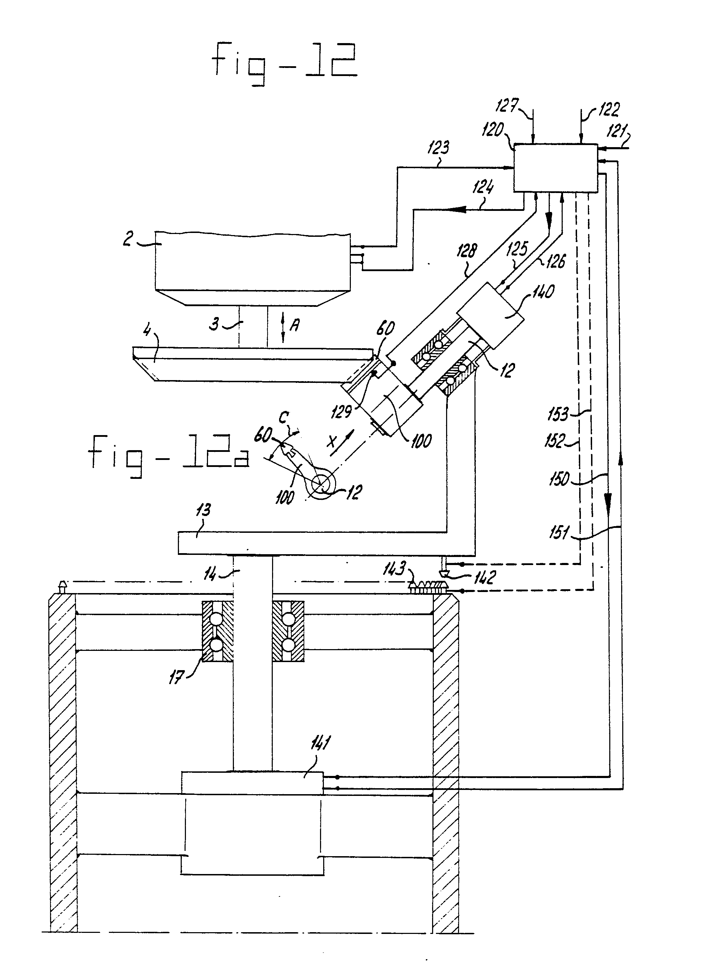

Figure 12 diagrammatically shows a device comparable to that in Figure 10, corresponding parts of which have the same reference numerals as in Figure 10 and have already been described there. Figure 12 differs in that the controls of the unrolling movement are also controlled via the processor 120, instead of mechanically. Due to the use of only one single spark tooth 100 with spark strip 60 any arbitrary tooth number can now be provided in the workpiece and therefore any arbitrary transmission ratio can be realized in a transmission (within the physical limitations of the spark erosion machine used). The absence of the mechanical unrolling control is compensated for by the electrical equivalent, consisting of two stepping motors optionally provided with in-built reductions, 140 and 141, which are control led by the pre-programmed processor. This receives the feedback signals 126 and 151, respectively, which report the position of the rotation in question of the spark tooth 100.60 and the turntable 13 with built-on spark tooth bearing shaft 12 back for comparison with the previously input programmes 122 and 127. If this feedback 126, 151 is not completely accurate the device can be supplemented by a more accurate feedback of the rotation position of the turntable 13 with the aid of the pair of sensors 142, 143 via the signals 152, 153. Especially if these measure over a considerably greater radius than that allowed by the feedback 151, the accuracy can become several times as great. Although it is not shown in Figure 12, a similar feedback of the position of the spark tooth 100.60 relative to the turntable 13 can be used if this can increase the accuracy. In the detail 12a, a front view according to arrow X is shown in which the minimally necessary angle of rotation C is shown for the spark tooth in order to completely spark-erode a tooth cavity in the workpiece (cf. Figure 5). The measurement of the shape of the spark strip 60 with the diagrammatically represented sensor 129 preferably takes place outside the spark rotation angle C so that the sensor 129 can be firmly fixed on the turntable 13 and so that it does not impair the feed movement A of the workpiece 4. The measuring signal 128 of the sensor 129 is compared in the processor with the input shape of the spark strip, so that the wear follows from this and a wear correction command signal can be superimposed on the phase correction signal 125 sent to the motor 140. It falls without the scope of the invention to describe details in respect of the electrical/electronic systems required for the zero point or reference determination in the rotations and translations used. These systems and the means used, among other the sensors, are generally known in various embodiments from, inter alia, the numerically controlled (NC) metal-working machines.

## Claims

1. Device for the unrolling spark erosion of gear wheels, in which a "spark wheel" is provided with a number of "spark teeth" and is active as electrode wheel (spark electrode) (5) is (essentially) unrolled over the surface of the workpiece (4) which is to be provided with teeth and acts as the other electrode and in which the spark teeth on the pitch circle of the spark electrode assume the correct position and are located at mutual circumferential distances equal to one or more full pitch distances and have a width at least equal to the tooth width of the toothing to be manufactured in the workpiece, in which each spark tooth spark-erodes itself deeper into the workpiece under the control of a feed device and in which the resulting tooth formation produced takes place uniformly over the full tooth width,
- comprising a spark generator, a frame (1, 24) having a linear feed device (2, 3) for the control of the electrode relative to the workpiece as a function of the set spark power in relation to the instantaneously occurring spark power, a carrier (10, 11) for the workpiece (4) which is movable relative to the frame, a container which surrounds at least the spark-erosion area and is filled with an insulating liquid, and insulating means between the electrode(s) and the workpiece including the respective carriers thereof,
- the workpiece being fastened via the carrier (10, 11) to the feed device (2, 3) and located coaxially with the direction (2a) of the feed movement (A), such that the workpiece (4) carries out exclusively the penetration-feed of the spark-erosion operation as a function of the set spark power, the spark electrode (5) being firmly fixed to a shaft (12) which is rotatably mounted (30, 31) without play on a turntable (13) which in turn is rotatably mounted without play, coaxially with the feed movement (A) relative to and by the frame (1, 18, 17) but is fixed in the direction of the feed movement (A) and provided with means (19-22) for rotatary drive, in which at least one circumferential toothed control bush (curved rack) (41, 44) having a pitch circle located in a plane perpendicular to the rotation centre line (1a) of the turntable is fixed, concentrically with the centre line of the workpiece (2a) and with the coaxial direction of the feed (A), to the frame (1, 24), a follower gear wheel (40) engaging without play in this control bush (44), which follower wheel (40) is firmly fixed to the shaft (12) which carries the spark electrode (5) and serves as drive wheel for that shaft and in which the transmission ratio between the control bush (44) and the follower wheel (40) is the same as that between the spark electrode (5) and the toothing (25, 26) to be manufactured in the workpiece (4), characterized in that the spark teeth of the spark electrode (5) are at least partially manufactured from and/or lined with a spark-resistant material, such as a tungsten/copper compound.

2. Device according to Claim 1, characterized in that only a small number, for example 1, 2, 3, 4 or 5 and more, of the nominal number of teeth of the spark electrode wheel (5) are present and are designed as effective spark teeth which are uniformly distributed over the circumference of the pitch circle and the nominal number of teeth being a multiple of whole numbers of the number of spark teeth.

3. Device according to Claims 1-2, characterized in that only a part of each spark tooth of the spark electrode in the area of the tooth tip is manufactured from the spark-resistant material ("spark strip") (60; 60a, 60b) in the region of the tooth tip over the entire tooth width and the remaining part ("tooth root") (100, 101) is made from known material (such as copper or optionally copper-plated steel), the tooth root being retracted (5c) within the theoretical spatial tooth profile (5a) such that it does not participate in the spark discharge, and in that there are means for phase correction (120; 90-98; 110-119) which are adapted so as to ensure that, during the penetration feed (A) when spark-eroding the spark strip into the workpiece (4) correct involute tooth flanks (82, 83) are nevertheless machinable as envelope for a large number of successive phase-corrected cycloid path sections (80).

4. Device according to Claim 3, characterized in that the means for phase correction consist of an accurate play-free angle adjustment device arranged in the connection between the follower gear wheel (40) and the spark teeth (5), such as a worm wheel/worm transmission with stepping motor (90-98; 110-119) and of a pre- programmed control device (120), such as a processor, which controls the angle adjustment device (stepping motor) (96; 119) during the entire sparking operation such that the pre-programmed phase lead (+f) and phase lag (-f) of the spark strip (60) relative to the follower gear wheel (40) are obtained as a function of the spark-erosion depth (feed) (A).

5. Device according to Claim 4, characterized in that the control device (120) at the same time carries out a pre-programmed toothed shape correction (127) via the phase-correction means, and/or in that signals (128) obtained by means for measuring (129) (such as optically, acoustically, inductively, capacitively) the shape of the spark tooth flank are fed into the control device (120) pre-programmed with the desired face shape data, the wear of the spark strip which is active at any instant is determined for delivering commands (125) for compensation of that wear via the phase correction.

6. Device according to Claim 3 in which the transmission ratio is 1:1 and the module is identical, characterized in that the phase correction means are formed by each tooth of the follower gear wheel (40) which runs on the control bush (41, 44) being provided with a geometrically identical tooth profile corresponding to that of the spark teeth, provided with a spark strip, of the spark electrode, and by means, such as a friction clutch, which can exert a torque on the shaft (12) optionally in each of the two directions of rotation during standstill and rotation of the shaft, in order that the tooth tips of the follower gear wheel (401) (Figure 4) completely follow the two faces of the control bush teeth, all this in thin particular for post-erosion in order to achieve high tooth s not accuracy.

7. Device according to Claims 1-6, characterized in that the spark tooth or the spark strip forms a loose replacement part (60) manufacturable by, for example, sintering, which can be mounted by clamping (Figure 2) or hard-soldering (Figure 9) or the like on the carrying tooth root of the spark electrode.

8. Device according to Claim 7, characterized in that the effective spark part of the spark strip (60) has a cross section with a width (64) equal to the tooth base cavity to be sparked and - in the mounted situation - a central part (67) which is radially extended outward which, as a wear body, carries out the greatest par of the spark-erosion work and at the same time produces the non-critical tooth cavity bottom in the workpiece.

9. Device according to Claim 8, characterized in that the spark strip - viewed in the mounted spark position - has the wear body (67) with a cross section (65, 66) which is increasingly extended outwards in the tooth width direction corresponding to an increasing radial diameter of the workpiece area to be machined (Fig. 4).

10. Device according to Claims 1-9, in which the spark wheel has only a few spark teeth, being a fraction of the nominal number of teeth, such as 2, 3, 4, 5 or more, characterized in that a few control racks (42, 41) with small mutual distance are arranged concentrically next to each other, with tooth numbers formed as a product of prime numbers, for example
a. 2.2.2.3.3.5 = 360
b. 5.7.11 = 385
c. 2.2.3.5.7 = 420,
preferably with the same module for each control rack to be able to interact with the same follower gear wheel (40).

11. Device according to Claims 1-10, characterized in that the turntable (13) can be adjusted via an adjustable hinge (14a) with centre line through the feed centre line (2a) and perpendicular to the shaft(12) at an angle deviating from 90° relative to the axis of rotation (1a), the follower gear wheel (40), mounted on the rigid shaft (12) remaining in mesh with the control rack (44) so that crown wheel transmissions with axis crossing or intersecting each other at an arbitrary angle deviating by approximately up to ± 45° from 90° can be manufactured.

12. Device according to Claims 1-11, characterized in that a double-cardan isochronous transmission (131, 132; 12c) is fitted in the shaft (12) with a suitable journalling of each of the two shaft ends (12a, 12b) on the turntable (13), so that crown wheels for crossing axis and/or with angles greatly deviating from 90° can be spark-eroded by unrolling between the axes of the transmission.

13. Method for operating the control device for the phase correction means, characterized in that data concerning the desired tooth shape are fed into memory means (122) of the control device (120), that the feed depth (A) is continuously measured during operation and is fed (123) into the control device (120) in which the measured values are compared with the stored data in respect of the desired tooth shape, in order to determine an associated instantaneous phase angle therefrom and to emit a corresponding control signal, depending thereon, to the adjusting motor (96, 119) of the phase angle adjusting device.

14. Method according to Claim 13, characterised in that data relating to predetermined corrections (127) of the theoretically desired tooth shape, such as profile camber, bending correction, tip/base correction, can be fed into the memory means.

15. Method according to Claims 13 or 14, characterised in that the shape of the actually sparked tooth is also measured (129) during operation and fed (128) into the control device, in which the measured values are compared with the stored data in respect of the desired toothed shape, in order to determine therefrom an associated supplementary phase angle correction to compensate for the instantaneous wear/erosion of the effective spark strip, and to emit, depending thereon, a corresponding supplementary control signal to the adjusting motor (96, 119).

16. Device for the unrolling spark erosion of gear wheels, in which a "spark wheel" provided with a number of spark teeth is active as electrode wheel (spark electrode) (5) and is (essentially) unrolled over the surface of the workpiece (4) which is to be provided with teeth and acts as the other electrode and in which the spark teeth on the pitch circle on the spark electrode assume the correct position and are located at mutual circumferential distances equal to one or more full pitch distances and has a width at least equal to the tooth width of the toothing to be provided in the workpiece, in which each spark tooth spark-erodes itself deeper into the workpiece under the control by a feed device and the resultant tooth formation takes place uniformly over the full tooth width,
- comprising a spark generator, a frame (1, 24) having a linear feed device (2, 3) for the control of the electrode relative to the workpiece as a function of the set spark power in relation to the instantaneously occurring spark power, a carrier (10, 11) for the workpiece (4) which is movable relative to the frame, a container which surrounds at least the spark-erosion area and is filled with an insulating liquid, and insulating means between the electrodes and the workpiece including the respective carriers thereof,
- the workpiece being fastened via the carrier (10, 11) to the feed device (2, 3) and located coaxially with the direction (2a) of the feed movement (A), such that the workpiece (4) carries out exclusively the penetration feed of the spark-erosion operation as a function of the set spark power. the spark electrode (5) being firmly fixed to a shaft (12) which is rotatably mounted (30, 31) without play on a turntable (13) which in turn is rotatably mounted without play, coaxially with the feed movement (A) relative to and by the frame (1, 18, 17) but is fixed in the direction of the feed movement (A) and provided with means (19-22) for rotary drive. the shaft (12) carrying the spark electrode (5) being provided with a drive device (140) for the unrolling rotation
- and also comprising unrolling synchronization means,
- and furthermore comprising a pre-programmed control device (120), such as a processor, for phase correction during the use of spark teeth (100) which are each provided with a spark strip (60), characterized in that for rotary drive of the turntable (13) and for rotary drive of the spark electrode shaft (12) a stepping motor (141, 140) or the like is fitted in each case,
- that the means for the unrolling synchronization are formed by a numerically pre-programmable control device which can be incorporated in the processor (120), so that, in addition to phase correction as a function of the depth feed (A), the processor is at the same time adapted, for controlling the unrolling synchronization of the two rotations via the stepping motors (141, 140) or the like.

17. Device according to Claim 16, characterized in that the processor (120) also controls pre-programmable tooth shape corrections (127) via the phase correction means.

18. Device according to Claim 16 or 17, characterized in that only one single effective spark tooth (100) optionally with spark strip (60) is present on the spark electrode,
- that, after spark-eroding one or a few teeth into the workpiece, the geometry of the spark tooth during its stay in the starting position outside the workpiece is measured by means (129), provided for this purpose, such as optical, acoustic, inductive or capacitive measuring sensors, for the determination of the instantaneous shape,
- and that signals (128) received by these measuring sensors (129) are fed into the control device (120) pre-programmed with the desired shape for the determination of the wear which has occurred for delivering commands to compensation for this wear to the stepping motors or the like.

19. Method for operating the control device according to one or more of Claims 16, 17, 18 characterized

- in that data (122) in respect of the desired number of teeth, the synchronization and the desired tooth shape and also data in respect of pre-determined correction (127) of the theoretically desired tooth shape (such as profile camber, bending correction, tip/base correction) and. respectively, also relating to the new dimensions of the effective spark strip are fed to the memory means of the control device (120),

- that the feed depth (A) and the instantaneous dimensions of the effective spark strip are respectively continuously measured during operation and are fed (123, 128) into the control device in which the measured values are compared with the stored pre-programmed data, in order to determine therefrom the associated instantaneous synchronization, phase angle, tooth shape correction and wear correction, respectively, and to emit, depending thereon, a corresponding control signal, optionally superimposed several times, to the stepping motor(s) (140, 141) or the like.

# Fig-1

Fig-2

Fig-4

fig-3

$C_R$  $C_L$  62  80

a  b  c

83  85  81 84 82

4

$R < R_2$

$\alpha \approx 20°$
$R \approx R_2$

$R > R_2$

fig-6

a  b

65/66

85a  A  5a
85
83  Af
5a
+f
-f
82

fig - 5

fig - 7

Fig - 8

0 292 081

Fig-9

# Fig - 10

# fig - 11

# Fig-12

# Fig-12a

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | EP-A-0 077 097 (KUIKEN NV)<br>* Claims *<br>--- | 1 | B 23 H    9/00<br>B 23 H    1/06 |
| Y | GB-A-1 279 624 (ROLLS-ROYCE)<br>* Page 1, lines 11-35,72-75 *<br>--- | 1 | |
| A | US-A-3 473 267 (KOLLSMAN)<br>* Abstract *<br>--- | 1,16 | |
| A | FR-A-1 196 818 (OTNIMA)<br>* Summary 170 *<br>----- | 1 | |

TECHNICAL FIELDS
SEARCHED (Int. Cl.4)

B 23 H

The present search report has been drawn up for all claims

| Place of search | Date of completion of the search | Examiner |
|---|---|---|
| THE HAGUE | 17-08-1988 | DAILLOUX C. |